# FASCICULE DE BREVET EUROPEEN

(11) **EP 1 009 178 B1**
(45) Date de publication et mention de la délivrance du brevet: **14.02.2007**
(21) Numéro de dépôt: 99403032.8
(22) Date de dépôt: 06.12.1999
(51) Int. Cl.: H04Q 7/26, H04Q 7/38, H04M 3/54

(54) **Procédé de routage d'appels entrants destinés à un téléphone mobile**
Verfahren zur Anrufleitweglenkung zu einem mobilen Telefon
Call routing method to a mobile phone

(30) Priorité: 07.12.1998 FR 9815432
(43) Date de publication de la demande: 14.06.2000
(73) Titulaire: SAGEM Communication, 75015 Paris (FR)
(72) Inventeur: Chabonnier, Philippe M., 95000 Cergy (FR)
(74) Mandataire: Schmit, Christian Norbert Marie

(56) Documents cités:
- WO-A-95/01070
- US-A- 5 592 533
- US-A- 5 675 629
- US-A- 5 826 191

## Description

La présente invention a pour objet un procédé de routage de communications destinées à un téléphone mobile détenu par un utilisateur. Elle a pour but de réduire la surcharge des réseaux de télécommunications avec des téléphones mobiles. Elle concerne le domaine mixte de la téléphonie mobile sur réseau public et de la téléphonie sur réseau commuté ou mobile. Elle trouve son application aussi bien dans le domaine industriel que dans le domaine privé, des modifications à apporter à un réseau commuté public étant mineures dans ce dernier cas.

Dans le domaine de la téléphonie on a connu dès le départ des réseaux commutés dans lesquels des lignes physiques, en cuivre, aboutissent chez des abonnés d'un côté, et à un central de commutation et de répartition à une autre extrémité. Des circuits de commutation permettent de mettre en communication plusieurs abonnés. Le coût des communications de ce type est en général faible du fait de l'amortissement déjà réalisé des équipements. Dans de grands ensembles, notamment des entreprises, de tels réseaux commutés privés sont aussi en place.

Il existe depuis quelques années des réseaux de téléphonie mobile. Dans ceux-ci les liaisons entre des postes téléphoniques ne sont plus réalisées par des lignes filaires en cuivre mais par des liaisons radioélectriques. Des stations de base sont réparties de place en place sur un domaine, ou une région. Elles peuvent entrer en relation avec les téléphones mobiles qui les sollicitent. Ces stations de base sont par ailleurs reliées entre elles et à un circuit central (en partie décentralisé) de répartition des communications téléphoniques. Le fonctionnement est du même type que pour les réseaux commutés, mais il permet en outre la mobilité des interlocuteurs. Bien entendu les réseaux de téléphonie mobile sont connectés aux réseaux commutés de telle façon que tous les interlocuteurs puissent se joindre entre eux.

Les réseaux de téléphonie mobile publics (c'est-à-dire s'étendant sur un domaine très vaste à l'échelle d'un pays) sont très coûteux à mettre en place compte tenu de la mobilité des utilisateurs. Le coût de tels réseaux est essentiellement lié à la nécessité de pourvoir à des possibilités de communication en tous les endroits d'un domaine. Il est donc nécessaire d'installer partout des équipements correspondants même si la fréquentation et l'utilisation de ces équipements dans certains endroits est peu importante. En plus, les performances des équipements doivent correspondre à leur utilisation maximale, même si celle-ci est rare. De ce fait les réseaux de téléphonie mobile sont plus chers et les communications de téléphonie mobile sont facturées plus chères aux interlocuteurs. Le coût d'une communication avec un téléphone mobile est de l'ordre de 5 à 10 fois le coût d'une communication locale sur un réseau commuté.

Il existe par ailleurs des réseaux de téléphonie mobile privés. Ces réseaux ne présentent pas les problèmes de coût des réseaux de téléphonie mobile publics car en général leur surface d'intervention est limitée. Un nombre limité de stations de base est alors suffisant pour couvrir par son rayonnement un domaine recherché, tout en conduisant à une réduction de l'infrastructure filaire à mettre en place dans le domaine pour pouvoir joindre n'importe quel interlocuteur à n'importe quel endroit. On note dans ce cas une assez bonne adéquation entre les performances des équipements et leur utilisation régulière et continuelle.

Il existe également des autocommutateurs privés pour gérer ces réseaux. Ainsi dans une entreprise, tous les postes téléphoniques de l'entreprise peuvent être reliés à un autocommutateur privé, pour pouvoir établir des communications entre eux sans nécessité de passage par un réseau public. Dans ces deux derniers cas d'utilisation privée, évidemment le coût des communications est nul. Tout au plus fait-il l'objet d'une facturation interne pour des raisons de répartition de charges.

L'existence de ces différents réseaux conduit les utilisateurs à des habitudes variées dont certaines prennent des tournures coûteuses. Ainsi dans une entreprise, il est possible qu'un utilisateur soit doté d'un téléphone mobile dont l'abonnement auprès d'un opérateur public de téléphonie mobile est souscrit par l'entreprise. Il est possible que cet utilisateur soit doté également sur son bureau d'un deuxième poste téléphonique. Ce deuxième poste peut être fixe ou mobile. Dans ce dernier cas, il est relié à un réseau de téléphonie mobile privé. Cet utilisateur doit donc faire connaître à ses collègues de travail ses deux numéros de téléphone : son numéro pour être appelé sur le réseau de téléphonie privé et son numéro pour être appelé sur le réseau public de téléphonie mobile.

Comme en principe l'utilisateur emporte toujours avec lui son téléphone mobile, on a constaté que ses différents interlocuteurs prenaient l'habitude de l'appeler de préférence sur son poste de téléphonie mobile, où ils étaient presque toujours sûrs de le joindre, plutôt que de tenter de le joindre à son deuxième poste téléphonique d'où il était quelques fois absent. Evidemment le coût des communications facturées dans ce cas est très élevé alors qu'il pourrait être nul dans l'autre cas. Ces communications occupent par ailleurs le réseau de téléphonie mobile dont on peut craindre la saturation.

Pour remédier à ce problème il a été prévu différents systèmes. Notamment dans le document WO-A-95/01070, il a été imaginé un système dans lequel un utilisateur, au moment où il arrive à son travail dépose son téléphone mobile sur un socle de rechargement. Le dépôt de ce téléphone mobile sur ce socle est utilisé pour provoquer un reroutage des communications destinées à cet utilisateur. Ce reroutage déplace les appels pour cet interlocuteur de son numéro de téléphone en téléphonie mobile à son numéro de téléphone dans l'autocommutateur privé. Dans ces conditions un des collègues de travail de cet utilisateur, qui chercherait à le joindre et qui composerait le numéro de téléphone de téléphonie mobile de cet utilisateur, serait mis en communication avec cet utilisateur mais avec un poste téléphonique relié sur le réseau de téléphonie privé.

En variante, le téléphone mobile de cet utilisateur est mixte. C'est-à-dire qu'il est capable de fonctionner en permanence avec un réseau public de téléphonie mobile et avec un réseau privé de téléphonie mobile. Dans ce cas, la détection de la présence de ce téléphone mobile peut être réalisée par une interrogation diligentée par une station de base du réseau privé. Si le téléphone mobile répond à cette interrogation, c'est que son porteur est sous la couverture radioélectrique de la station de base privée. Dans ce cas, le réseau privé organise des reroutages correspondants.

On a constaté toutefois que cette solution n'était pas suffisante parce que, dans le premier cas, bien que l'opération de dépôt du téléphone mobile sur le chargeur soit très simple, elle n'était pas effectuée avec suffisamment de rigueur par les différents utilisateurs. De sorte que le réseau de téléphonie privé n'est pas averti de la présence de l'utilisateur concerné près d'un poste téléphonique fixe. Dans ce cas, les communications émises par ses collègues de travail ne sont pas déroutées. Cet utilisateur reçoit ses communications au travers du réseau public de téléphonie mobile.

Dans la variante, il est nécessaire que le téléphone mobile soit mixte d'une part, et capable d'autre part de recevoir en permanence des interrogations provenant de stations de bases de types différents, le type public et le type privé. Or un téléphone mobile mixte est cher. Et actuellement, le basculement d'une utilisation sur réseau public à une utilisation sur réseau privé n'est pas automatique. De sorte que l'utilisateur doit aujourd'hui agir positivement sur son téléphone mobile pour qu'il le passe d'un mode à l'autre. Ou bien cette action est remplacée par le dépôt sur un chargeur. Mais on a vu que cette opération simple n'était pas effectuée avec suffisamment de constance.

Bien entendu, si l'utilisateur n'effectue pas une manoeuvre qui paraît naturelle, celle consistant à déposer son téléphone mobile sur un chargeur quand il arrive à son travail, il est encore moins possible de lui demander d'effectuer une action positive quelconque pour indiquer qu'il est arrivé, et que maintenant on peut le joindre de préférence sur son poste de téléphonie fixe ou mobile privé plutôt que sur son poste de téléphonie mobile publique.

De ce fait, on a voulu remédier aux inconvénients liés à ces mauvaises habitudes des utilisateurs d'une manière qui soit totalement efficace, tout en ne conduisant pas ces utilisateurs à devoir accomplir des manoeuvres spécifiques provoquant ce reroutage de communication. On se sert du fait que l'utilisateur connecte normalement son téléphone mobile au réseau public dès son départ de son domicile. Quand il arrive sur son lieu de travail (ou dans un autre lieu pour généraliser), son téléphone mobile est de ce fait déjà en relation avec des stations de base de ce réseau public. On place alors près de l'accès à son lieu de travail (ou dans cet autre lieu) une station de base spéciale. Cette station de base spéciale n'est pas reliée au réseau public de téléphonie mobile. Elle est reliée uniquement à un réseau de téléphonie privé de l'entreprise.

Cette station de base spéciale est une station de base veilleuse qui écoute les émissions diffusées par une station de base normale du réseau public. En employant le même protocole d'émission que cette station de base normale, ou en faisant une exploitation, partielle, spécifique de certains éléments de celui-ci, la station de base veilleuse peut aussi être capable d'émettre des requêtes en identification de tous les téléphones mobiles qui passent sous sa couverture. Ces requêtes sont perçues par les téléphones mobiles qui sont sous sa couverture parce que la puissance locale de diffusion de ces requêtes est supérieure à la puissance normalement reçue de la station de base normale. Le téléphone mobile s'identifie alors en réponse à cette requête à moins qu'il ne le fasse naturellement dans le cadre de sa relation avec la station de base normale. Une telle station de base spéciale est connue du document US 5 675 629 (RAFFEL ET AL), publié le 07 octobre 1997. Cette station de base permet à un téléphone mobile sous sa couverture d'appeler un second téléphone mobile sous sa couverture sans passer par un réseau externe grâce à une fonction "Intercom".

Dans l'invention une fois que cette identification est effectuée, on utilise l'information de révélation de la présence d'un téléphone mobile dans le domaine pour modifier le routage de communications adressées à l'utilisateur de ce téléphone mobile. De ce fait, dans le cas d'une admission dans un domaine d'une entreprise, les communications internes de cet utilisateur sont orientées vers son poste de téléphonie fixe. En agissant ainsi on obtient le résultat particulièrement intéressant que, même si le téléphone mobile de cet utilisateur n'est pas mixte (et à fortiori même s'il n'est pas mixte en permanence), les communications émises par les collègues de travail de cet utilisateur et qui seraient destinées à son téléphone mobile lui seront acheminées à son téléphone de son bureau. On transpose facilement cette solution dans le domaine privé.

L'invention a donc pour objet un procédé de routage d'appels entrants destinés à une personne dans lequel
- on munit la personne d'un premier téléphone mobile, ce premier téléphone étant susceptible d'entrer en relation, selon un premier protocole, avec un premier réseau de téléphonie mobile et possédant à l'égard de ce premier réseau un premier numéro pour être appelé,
- on détecte la présence de ce premier téléphone dans un environnement d'un deuxième téléphone relié selon un deuxième protocole à un deuxième réseau différent et indépendant du premier réseau, ce deuxième téléphone possédant à l'égard de ce deuxième réseau un deuxième numéro pour être appelé,
caractérisé en ce que
- on crée dans des circuits de commutation du deuxième réseau une table de correspondance du premier numéro au deuxième numéro, et
- on déroute dans le deuxième réseau des communications émises depuis ce deuxième réseau et à destination du premier téléphone en des communications à destination du deuxième téléphone.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un premier système de téléphonie mobile et d'un deuxième système de téléphonie permettant la mise en oeuvre du procédé de l'invention ;
- Figure 2 : un diagramme de puissance d'émission montrant une couverture radioélectrique efficace d'une station de base veilleuse selon l'invention ;
- Figures 3a et 3b : une comparaison des émissions d'une station de base normale et de leur simulation par une station de base veilleuse selon l'invention.

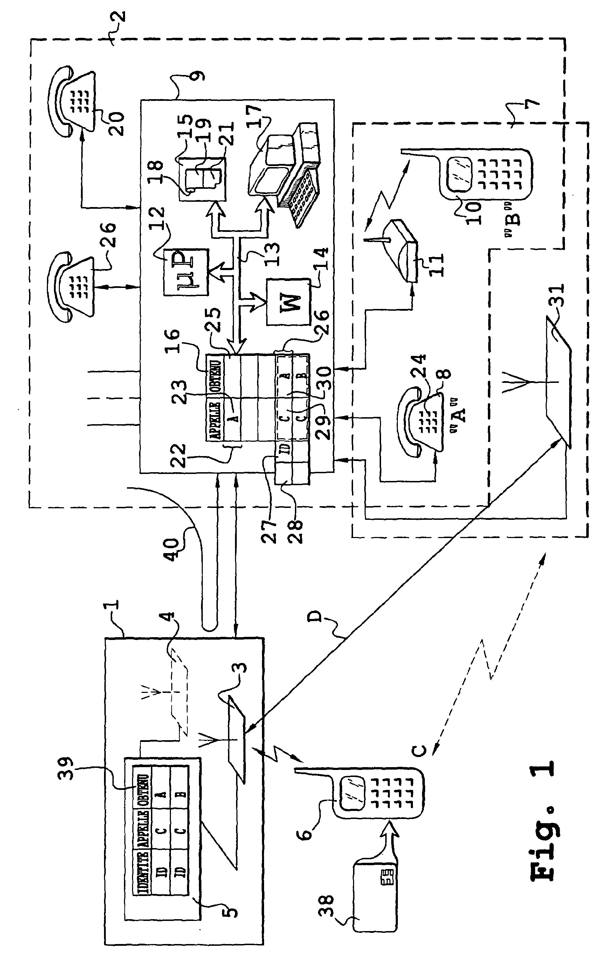

La figure 1 montre un premier système 1 de téléphonie mobile et un autre système 2 de téléphonie utilisable pour mettre en oeuvre le procédé de l'invention. Dans le système de téléphonie mobile 1, un ensemble de stations de base 3 et 4 réparties dans une région, sont en relation avec un circuit central 5 de gestion des communications. Les stations de base 3 à 4 peuvent par ailleurs entrer en relation avec des téléphones mobiles 6 attribués à des personnes. Un téléphone mobile 6 est reconnu dans un circuit central 5 par une identification ID mise en correspondance, dans une mémoire du circuit central 5 avec un numéro de téléphone C. Quiconque veut entrer en relation avec le téléphone mobile 6 par l'intermédiaire du réseau 1 utilise le numéro C. Quand le circuit central 5 reçoit un appel destiné au téléphone mobile dont le numéro est C, il met en service une station de base particulière, par exemple la station de base 3, qui a par ailleurs signalé au circuit central 5 qu'elle disposait sous sa couverture radioélectrique d'une possibilité de communication avec le poste téléphonique mobile 6 reconnu par son identification ID. Le téléphone 6 échange avec la station de base 3 selon un protocole propre au réseau 1. Par exemple, ce protocole peut être un protocole de type GSM si le réseau est de ce type.

L'utilisateur du téléphone 6 se rend ensuite dans un environnement 7 d'un deuxième téléphone. Cet environnement 7 est par exemple celui de son lieu de travail, de son bureau, où est disposé un deuxième téléphone affectable à cet utilisateur. Ce deuxième téléphone fait partie du réseau 2. Le deuxième réseau est ici un réseau privé. Il pourrait néanmoins être un réseau commuté public. Le deuxième téléphone dans ce réseau 2 peut ainsi être un téléphone fixe 8 relié à un circuit central 9 du réseau 2, ou un téléphone mobile 10 relié également à ce circuit central 9 mais par l'intermédiaire d'une station de base locale 11. Le circuit central 9 comporte un processeur de traitement 12 relié, par un bus 13 de données, d'adresses et de commande, à une mémoire de travail 14, à une mémoire programme 15, à une mémoire de données 16 et à différents périphériques dont notamment un couple écran-clavier 17. Cette architecture peut être réalisée différemment, notamment les mémoires peuvent être combinées en une seule mémoire. Les différents organes peuvent être réalisés avec des technologies et des techniques variées. D'autres téléphones du réseau 2 sont reliés au circuit central 9. L'architecture du circuit central 5 est du même type que celle du circuit central 9.

La mémoire programme 15 comporte dans un programme 18 une première partie de programme 19 concernant une commande classique du fonctionnement du réseau 2. Notamment, la mise en communication et l'échange entre des interlocuteurs du réseau 2 s'effectue selon un deuxième protocole, qui peut être différent du protocole du réseau 1, et qui est mis en oeuvre par ce programme 19. Pour simplifier les explications, on admettra que l'utilisateur du téléphone mobile 6 peut être joint sur le téléphone fixe 8, ou le téléphone mobile 10, par un interlocuteur utilisant un téléphone 20 relié lui aussi au réseau 2. Le numéro de téléphone à composer à partir du téléphone 20 est respectivement A ou B selon qu'on cherche à joindre l'utilisateur du téléphone mobile 6 sur son poste 8 ou sur son poste 10. Les déroutages qu'on veut organiser sont des déroutages d'appels issus du téléphone 20, à destination du téléphone mobile 6 et avec un numéro d'appel C, en des appels à destination d'un des téléphones 8 ou 10 avec des numéros d'appel A ou B.

Selon l'invention le programme 18 comporte une autre partie de programme 21 relative au reroutage des communications. Par exemple la partie 21 concerne dans la mémoire 18 la réalisation d'enregistrements 22. Les enregistrements 22 comportent essentiellement une zone 23 dans laquelle est renseigné un numéro de téléphone A par lequel on peut joindre une personne dans le réseau 2. Le numéro de téléphone A est le numéro de téléphone du combiné téléphonique 8 relié à l'autocommutateur privé 9.

Les circuits centraux 9 sont déjà munis dans l'état de la technique de moyens de reroutage. Ces reroutages peuvent en général être programmés à partir de séquences codées avec les touches 24 des combinés téléphoniques 8 ou 10 reliés à l'autocommutateur 9. Les séquences codées provoquées par les touches 24 sont effectués selon un protocole propre à l'autocommutateur 9. Avec ces séquences de touche on peut ainsi provoquer au moyen du combiné 8 (appelable sous A) la modification d'un enregistrement 22 pour qu'en regard d'une zone 23 de cet enregistrement soit enregistrée dans une zone 25 une information B, ou C. Dans ces conditions, au moment où un appelant utilisant le téléphone 20 et le réseau 2 appelle un téléphone 8 par son numéro A, le circuit central 9 déroute cet appel sur un téléphone appelable par le numéro B, ou C respectivement.

Dans l'état de la technique, la zone 25 est la seule modifiable à partir du téléphone 8. En effet, il ne serait pas admissible que les communications destinées à un téléphone 8 (où est censée se trouver une personne particulière) soient détournées à partir d'un téléphone quelconque, par exemple le téléphone 26. Donc la zone 23 n'est pas modifiable à partir du téléphone 8, ni d'aucun autre d'ailleurs. Eventuellement le déroutage de A vers B, ou vers C, peut être organisé depuis un autre téléphone que le téléphone 8, à partir du téléphone 20 par exemple. Mais dans ce cas, cette opération est sujette à une séquence de touches plus complexe, dans laquelle en pratique un code d'autorisation de déroutage doit être composé en plus par le demandeur du reroutage. Dans tous les cas, seule la zone 25 est modifiée pour y faire figurer B ou C (ou A si le reroutage est abandonné). La zone 23 n'est pas modifiée.

En cas de demande habituelle, la modification de la zone 25 est réalisée simplement en détectant avec le circuit central 9 que la demande de reroutage provient du téléphone 8, en recherchant l'enregistrement 22 qui contient A en zone 23 et qui correspond au téléphone 8, et en affectant à l'enregistrement 22, automatiquement, obligatoirement et pas à un autre, en zone 25 les modifications demandées d'acheminement des communications.

Selon l'invention, on va procéder différemment. D'une part on va demander à l'utilisateur de communiquer, verbalement ou par écrit, à une autorité de gestion du circuit central 9, l'identité ID de son téléphone mobile et le numéro C par lequel cet appareil est appelable au travers du réseau 1. Bien entendu cette communication n'est possible que si cette autorité est acceptée par l'utilisateur du téléphone 6. Ceci est normalement le cas si cette autorité est l'employeur de cet utilisateur, et a fortiori si c'est cette autorité qui paye l'abonnement et les communications assurées par ce téléphone 6. Il est possible que le réseau 2 soit néanmoins un réseau de téléphonie publique. Dans ce cas, l'opérateur de téléphonie publique pourra demander à l'utilisateur du téléphone 6 des garanties de ce que cet utilisateur est bien le véritable possesseur de l'abonnement concerné.

Avec ces informations, cette autorité, en utilisant le couple écran clavier, et le programme 21, va créer un enregistrement 26 de la mémoire de données 16. Cette autorité, en face de cet enregistrement 26, va ajouter deux zones. Un première zone 27 contiendra l'identification ID du téléphone 6. Une deuxième zone 28 comportera une information fluctuante signalant que le téléphone 6 a été repéré dans l'environnement du téléphone 8, ou du téléphone 10. On verra plus loin comment ce repérage est effectué. Dans l'enregistrement 26, à l'aplomb de la zone 23, figurera en zone 29 le numéro de téléphone C avec lequel on voudrait joindre le téléphone 6. En zone 30 à l'aplomb de la zone 25 figure un numéro de téléphone A, ou B, par lequel sera dérouté tout appel destiné à C.

Le fonctionnement est alors le suivant. Lorsque le téléphone 6 est détecté dans l'environnement du téléphone 8, ou 10, la zone 28 est active. Elle comporte par exemple un bit porté à un. Dans ce cas l'enregistrement 26 doit être pris en considération par le circuit central 9 pour effectuer les reroutages. Si la zone 28 est inactive, l'enregistrement 26 est négligé par le circuit central 9. Il n'y a pas de reroutage. On remarque que figurent deux informations redondantes, le numéro ID et le numéro d'appel C puisque toutes deux désignent le téléphone 8. Si dans certaines situations ces deux informations sont confondues, on pourra se passer de la zone 27. Cependant en règle générale elles seront utiles toutes les deux car le numéro ID désigne le téléphone mobile, alors que le numéro C désigne l'abonnement.

Au moment où l'autorité crée l'enregistrement 26, elle fige normalement le reroutage de C sur A, ou sur B. On verra par la suite comment ceci peut être modifié.

La détection de la présence du téléphone mobile 6 dans l'environnement du téléphone 8, ou 10, est réalisée avec une station de base spéciale : une station de base veilleuse 31 reliée uniquement au circuit central 9, et donc pas au circuit central 5 ou à la station de base 3. La station de base 31 effectue deux opérations. Premièrement elle écoute la station de base 3. Si elle peut écouter plusieurs stations de base 3 et 4, elle écoutera de préférence celle qu'elle reçoit le mieux. Eventuellement, elle écoutera les stations 3 et 4 alternativement, par exemple pendant des périodes de 5 secondes. Ou bien elle est même capable de les écouter toutes les deux en même temps. Cette écoute est du type de celle exécutée par un téléphone mobile qui se trouve sous la couverture de la station de base 3. Ce faisant cette station de base 31 sait quel est le canal de balise, BCCH dans le cadre d'un réseau 1 de type GSM, qui est diffusé par la station de base 3. Elle connaît donc les signaux que reçoivent les téléphones mobiles qui passent à proximité d'elle.

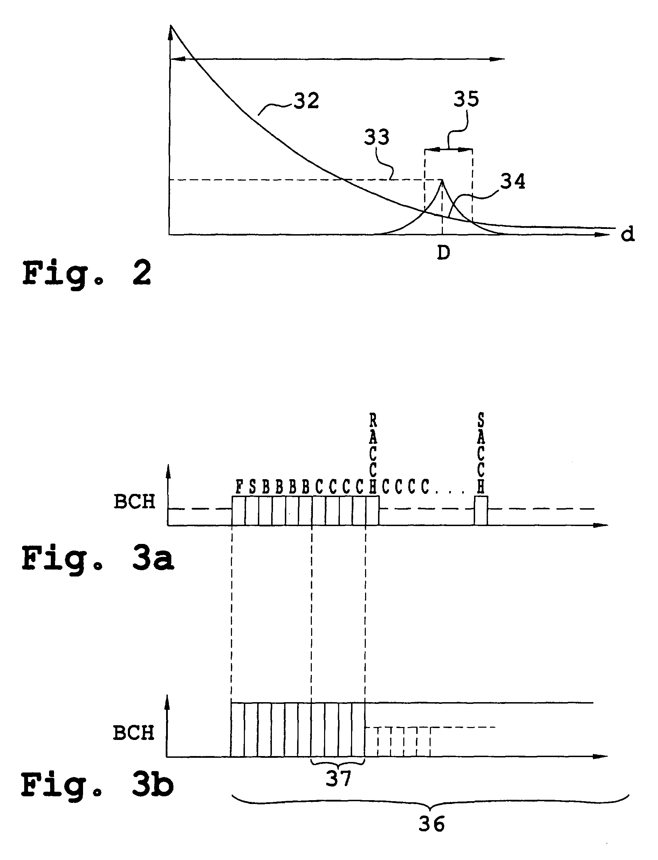

Comme deuxième action, la station de base 31 peut être capable d'émettre, localement, des signaux simulant les signaux émis par la station de base 3. La figure 2 montre quelle est la puissance locale d'émission de la station de base 31. Les figures 3a et 3b montrent la simulation entreprise de ces signaux. Sur la figure 2, on distingue une courbe 32 montrant la décroissance de la puissance localement détectable des émissions de la station de base 3 en fonction d'un éloignement d de cette station de base 3. Les téléphones mobiles qui s'éloignent de la station de base 3 constatent cette décroissance. La station de base 31 est placée à une distance D de la station 3. Les émissions de la station de base 31 simulant les émissions de la station de base 3 sont diffusées avec une puissance locale 33 supérieure à la puissance 34 avec laquelle localement on reçoit les émissions de la station de base 3. Ce faisant dans un espace 35 autour de la station de base 31, les téléphones mobiles présents détectent les injonctions émanant de la station de base 31, plutôt que celles provenant de la station de base 3. Eventuellement la zone de couverture de la station de base 31 est confinée à un sas de telle façon que les émissions de cette station de base 31 ne perturbent pas le fonctionnement du réseau 1.

Dans l'invention, on va profiter de cette détection préférentielle pour envoyer une instruction aux téléphones mobiles qui croisent dans l'espace 35 de se signaler en transmettant leur identification ID à la station de base 31 (et à la station de base 3, mais cette dernière ne va rien en faire puisqu'elle ne l'avait pas demandé). La requête en identification est périodique. Par exemple elle est lancée toutes les secondes. En réponse à une telle requête le téléphone mobile 6 sollicité répond par un message sur un canal de balise ou sur un autre en indiquant que sa réponse est une réponse d'identification, et que son identification est ID. Si la norme le prévoit, il peut répondre que son numéro d'appel est C. Mais dans le cas où elle ne le prévoit pas, la station de base 31 reçoit ce numéro ID. Le circuit central 9, en application du programme 21, recherche alors dans la mémoire 16 l'enregistrement 26 qui correspond à l'identification ID (ou au numéro C). Si l'utilisateur du téléphone 6 est un visiteur, ou quelqu'un d'inconnu du circuit central 9, rien ne se passe. Si cet utilisateur est un utilisateur pour lequel un enregistrement 26 a été créé, cet enregistrement 26 est activé comme prévu ci-dessus.

En variante, la station de base 31 est reliée à un réseau privé 2 qui est lui-même relié à un réseau de téléphonie publique (non représenté), commuté ou mobile. Les instructions de reroutage peuvent être alors acheminées à ce réseau public, par l'intermédiaire du réseau privé 2 qui envoie à ce réseau public une séquence de signaux mettant en place le reroutage. Ce réseau public met alors ce reroutage en oeuvre d'une manière similaire à celle du réseau 2. Si le réseau public est un réseau commuté, fixe, une autorisation préalable de reroutage devra avoir été convenue. Si le réseau public est le réseau de téléphonie mobile du téléphone mobile 6, on peut éviter cette autorisation préalable en envoyant à ce réseau de téléphonie mobile les références du téléphone mobile 6 en même temps que les instructions de reroutage. La station de base veilleuse 31 peut ainsi être reliée à ce réseau public non pas par un lien fixe, mais par un lien commuté. Ce lien commuté est du même type que celui qui relie le téléphone filaire 8 au circuit central 9.

La figure 3a montre schématiquement des signaux émis par la station de base 3 pendant des trames temporelles successives et réparties selon un motif connu. Par exemple, un tel motif comporte une succession de trames FCH, SCH, BCCH, CCCH, RACCH et SACCH dont la finalité est de transmettre aux téléphones mobiles des signaux de fréquence (F) de synchronisation (S), de diffusion générale (B), de commande (C), et diverses requêtes (R). Les téléphones mobiles répondent pendant des trames de type CCCH, ou SACCH. Dans l'invention, figure 3b, on fait émettre par la station de base 31 (avec un niveau local de puissance plus élevé) tout, 36, ou partie, 37, des signaux émis par la station de base 3. Cette émission est effectuée d'une manière compatible. Notamment, les téléphones mobiles dans l'espace C reçoivent ces signaux avec une synchronisation qui respecte leur éloignement de la station de base 3. Cependant, si les signaux émis par la station de base 31 sont émis en synchronisation avec ceux émis par la station de base 3, ils sont émis plus forts et surtout avec un contenu différent de façon à masquer les signaux de la station de base 3 par des signaux correspondant à la requête en identification évoquée.

De préférence, les employés travaillant dans le domaine 7 auront des téléphones mobiles 6 munis d'une carte à microcircuit 38 de type SIM, pour Secure Identification Module qui signifie module d'identification sécurisé. Une telle carte SIM permet, au moment de la mise en service du téléphone mobile 6, au détenteur d'un code secret de la carte 38 de pouvoir seul faire fonctionner ce téléphone mobile 6. Dans un perfectionnement de l'invention, on pourra indiquer dans la mémoire du microcircuit de la carte 38 des informations administratives nécessaires pour le contrôle d'accès de l'utilisateur du téléphone 6 dans le domaine 7.

L'échange entre la station de base 31 et le mobile 6 est du type de celui effectué par le téléphone mobile avec une station de base du réseau 1. Il correspond par exemple à une reprise de ligne qui prévaut entre un téléphone mobile et une station de base du réseau 1 quand, pour des raisons de propagation, la liaison ou la surveillance entre ce téléphone mobile et cette station de base ont été perdues. Ou bien il correspond aux étapes mises en oeuvre au moment de la mise en service du téléphone mobile dans le réseau 1. La particularité de l'invention se situe ici dans le fait que la station de base veilleuse 31 n'est reliée, par l'intermédiaire du circuit central 9 qu'au réseau 2. Elle n'est pas directement reliée au réseau 1.

L'activation de la zone 28 peut être temporisée. Une telle temporisation a par exemple pour objet de faire cesser la corrélation entre le numéro de téléphone A et le numéro de téléphone mobile C en fin de journée, afin de tenir compte du départ de l'utilisateur du téléphone 6 hors du domaine 7. Soit ce départ pourra être mesuré par la station de base 31 soit, si ce départ n'est pas mesuré de cette façon, on peut prévoir qu'en fin de journée que toutes les zones 28 des enregistrements 26 soient remises à zéro.

Le téléphone mobile 6 peut être de type mixte public-privé. Dans ce cas, son protocole de fonctionnement public est par exemple de type GSM alors que son protocole de fonctionnement dans le mode privé est par exemple de type DECT ou CTS. La station de base 31 peut alors, après avoir lancé sa requête en identification, et après avoir détecté que les appels sur le téléphone 8 devaient être reroutés, provoquer dans le téléphone 6 un basculement de mode d'utilisation. Ce basculement du mode public au mode privé est effectué en même temps que le reroutage est entrepris dans le circuit central 9. Ce basculement est d'autant mieux exécuté que le téléphone 6 est à ce moment en mode public, et que la station de base 31 émet sur le mode public. Dans ce cas, le téléphone 6 devient le téléphone 10 évoqué ci-dessus. Si le téléphone 6 est du type mixte permanent, il peut encore recevoir des appels provenant de la station de base 3, et des appels provenant de la station de base 11. Ces derniers appels sont soit des appels destiné au numéro B. Et là le fonctionnement est normal, il n'y a même pas reroutage. Soit ils sont des appels émis par des postes 20 du réseau 2 et destinés au numéro C mais rerouté. Les reroutages de C en A ou de C en B sont en principe exclusifs l'un de l'autre, il est toutefois possible de prévoir, avec une séquence de touches comportant un code d'autorisation de modification de passer d'un reroutage à l'autre. Dans ce cas, dans la séquence de touches l'indication C, pour la zone 29, et l'indication B (ou A) pour la zone 30 doivent être incorporées. On remarque toutefois que le numéro C n'est pas normalement un numéro de téléphone d'un téléphone du réseau 2, mais celui d'un téléphone d'un autre réseau, le réseau 1 ici.

Notamment dans les reroutages de l'état de la technique, cela n'est pas le cas. Chaque téléphone ne peut demander qu'au réseau auquel il est normalement relié de dérouter des appels vers d'autres téléphone. Ainsi, dans le réseau 1, il peut être prévu que le téléphone 6, demande des reroutage d'appels qui lui sont destinés (avec le numéro C) sur d'autre téléphones, par exemple le téléphone 8 (avec le numéro A). Ceci est montré par une mémoire de donnée 39 du réseau 1 du même type que la mémoire de données 16 du réseau 2. Dans ce cas, un appel émanant du téléphone 20 en direction du téléphone (6) avec le numéro C transite du circuit central 9 au circuit central 6, d'ou il est dérouté pour retourner au circuit central 9 en un appel du téléphone joignable avec le numéro A. L'aller et retour 40 est pénalisant en terme d'occupation de la liaison du circuit 5 au circuit 9. Il risque en outre d'être facturé à l'utilisateur du téléphone 6, voire au propriétaire du réseau 2.

Le reroutage dépend par ailleurs de préférence du lieu de la détection. Ainsi il est possible que dans le domaine 7 soient disséminés un certain nombre stations de base telles que 31 placées par exemple près d'accès à des lieux divers. Ces lieux divers correspondent chacun à des téléphones différents reliés au réseau 2. Dans ce cas, le reroutage sera modifié de la façon suivante. Cette autre station de base, du type de la station 31, qui effectue la détection du téléphone mobile 6 est associée à un téléphone dont le numéro est E. Au moment où le téléphone mobile 6 est détecté par elle, en même temps que la zone 28 de l'enregistrement 26 est activé, la zone 30 est modifiée pour indiquer le numéro de téléphone E qui correspond au poste téléphonique qui lui est attaché.

## Revendications

1. - Procédé de routage d'appels entrants destinés à une personne dans lequel
- on munit la personne d'un premier téléphone mobile, ce premier téléphone étant susceptible d'entrer en relation, selon un premier protocole, avec un premier réseau de téléphonie mobile et possédant à l'égard de ce premier réseau un premier numéro pour être appelé,
- on détecte la présence de ce premier téléphone dans un environnement d'un deuxième téléphone relié selon un deuxième protocole à un deuxième réseau différent du premier réseau, ce deuxième téléphone possédant à l'égard de ce deuxième réseau un deuxième numéro pour être appelé,
**caractérisé en ce que**
- on crée dans des circuits de commutation du deuxième réseau une table de correspondance du premier numéro au deuxième numéro, et
- on déroute dans le deuxième réseau des communications émises depuis ce deuxième réseau et à destination du premier téléphone en des communications à destination du deuxième téléphone.

2. - Procédé selon la revendication 1, **caractérisé en ce que** pour détecter la présence de ce premier téléphone,
- on place une station de base veilleuse, reliée uniquement au deuxième réseau, dans l'environnement du deuxième téléphone,
- on surveille avec cette station de base veilleuse les émissions d'une station de base la mieux reçue à l'endroit de cette station de base veilleuse, et
- on effectue un échange radioélectrique selon une simulation du premier protocole entre ce téléphone mobile et cette station de base veilleuse.

3. - Procédé selon la revendication 2, **caractérisé en ce que**,
- on effectue un échange radioélectrique selon une simulation partielle du premier protocole entre ce téléphone mobile et cette station de base veilleuse.

4. - Procédé selon l'une des revendications 2 à 3, **caractérisé en ce que**,
- on émet avec la station de base veilleuse, localement périodiquement des requêtes d'identification de téléphones mobiles.

5. - Procédé selon la revendication 4, **caractérisé en ce que** la périodicité des requêtes est de l'ordre de une seconde.

6. - Procédé selon l'une des revendications 4 à 5, **caractérisé en ce que** la requête est émise à un niveau de puissance qui, localement, est plus fort qu'un message équivalent d'une station de base du premier réseau.

7. - Procédé selon l'une des revendications 4 à 5, **caractérisé en ce que** la requête est émise à des dates compatibles avec celles de requêtes équivalentes émises par le premier réseau.

8. - Procédé selon l'une des revendications 1 à 7, **caractérisé en ce que** le reroutage dépend du lieu de la détection.

9. - Procédé selon l'une des revendications 1 à 8, **caractérisé en ce que** le deuxième téléphone est physiquement différent du premier téléphone.

10. - Procédé selon l'une des revendications 1 à 8, **caractérisé en ce que** le deuxième téléphone est confondu avec le premier téléphone en un téléphone mixte.

## Claims

1. A method for rerouting calls intended for a person in which
- the person is equipped with a first mobile telephone, this first telephone being capable of connecting, according to a first protocol, with a first mobile telephony network and having with reference to this first network a first number to be called,
- the presence of this first telephone is detected in an environment of a second telephone connected according to a second protocol to a second network that is different from the first network, this second telephone having with reference to this second network a second number to be called,
**characterized in that**
- a table of correspondence of the first number to the second number is created in the switching circuits of the second network, and
- calls transmitted from this second network to the first telephone are rerouted in the second network into calls to the second telephone.

2. The method according to claim 1, **characterized in that**, to detect the presence of this first telephone,
- a standby base station, connected only to the second network, is placed in the environment of the second telephone,
- transmissions from a base station that are best received at the location of this standby base station are monitored with this standby base station, and
- a radio exchange is performed according to a simulation of the first protocol between this mobile telephone and this standby base station.

3. The method according to claim 2, **characterized in that**,
- a radio exchange is performed according to a partial simulation of the first protocol between this mobile telephone and this standby base station.

4. The method according to one of claims 2 to 3, **characterized in that**
- periodic requests for identification of mobile telephones are locally transmitted with the standby base station.

5. The method according to claim 4, **characterized in that** the frequency of the requests is on the order of one second.

6. The method according to one of claims 4 to 5, **characterized in that** the request is transmitted at a power level that, locally, is higher than an equivalent message from a base station of the first network.

7. The method according to one of claims 4 to 5, **characterized in that** the request is transmitted at times that are compatible with those of equivalent requests transmitted by the first network.

8. The method according to one of claims 1 to 7, **characterized in that** the rerouting depends on the location of the detection.

9. The method according to one of claims 1 to 8, **characterized in that** the second telephone is physically different from the first telephone.

10. The method according to one of claims 1 to 8, **characterized in that** the second telephone is merged with the first telephone into a mixed telephone.

## Patentansprüche

1. Verfahren zum Leiten von eingehenden Anrufen, die für eine Person bestimmt sind, bei dem
- die Person mit einem ersten Mobiltelefon ausgestattet wird, wobei dieses erste Telefon nach einem ersten Protokoll mit einem ersten Mobiltelefonnetz in Verbindung treten kann und gegenüber diesem ersten Netz eine Nummer besitzt, um angerufen zu werden,
- das Vorhandensein dieses ersten Telefons in einer Umgebung eines zweiten Telefons, das nach einem zweiten Protokoll an ein zweites, zum ersten Netz unterschiedliches Netz angeschlossen ist, erfasst wird, wobei dieses zweite Telefon gegenüber diesem zweiten netz eine zweite Nummer besitzt, um angerufen zu werden,
**dadurch gekennzeichnet, dass**
- in Umschaltkreisen des zweiten Netzes eine Übereinstimmungstabelle der ersten Nummer mit der zweiten Nummer erstellt wird, und
- in dem zweiten Netz Kommunikationen, die von diesem zweiten Netz in Richtung des ersten Telefons gesandt werden, in Kommunikationen in Richtung des zweiten Telefons umgeleitet werden.

2. Verfahren nach Anspruch 1, **dadurch gekennzeichnet, dass** zur Erfassung des Vorhandenseins dieses ersten Telefons
- eine Kontrollbasisstation, die nur mit dem zweiten Netz verbunden ist, in der Umgebung des zweiten Telefons angeordnet wird,
- mit dieser Kontrollbasisstation die Entsendungen einer Basisstation, die an der Stelle dieser Kontrollbasisstation am besten empfangen wird, überwacht werden, und
- ein funkelektrischer Austausch nach einer Simulation des ersten Protokolls zwischen diesem Mobiltelefon und dieser Kontrollbasisstation erfolgt.

3. Verfahren nach Anspruch 2, **dadurch gekennzeichnet, dass**
- ein funkelektrischer Austausch nach einer Teilsimulation des ersten Protokolls zwischen diesem Mobiltelefon und dieser Kontrollbasisstation erfolgt.

4. Verfahren nach einem der Ansprüche 2 bis 3, **dadurch gekennzeichnet, dass**
- mit der Kontrollbasisstation lokal regelmäßig Anträge auf Identifikation von Mobiltelefonen entsandt werden.

5. Verfahren nach Anspruch 4, **dadurch gekennzeichnet, dass** die Regelmäßigkeit der Anträge ungefähr eine Sekunde beträgt.

6. Verfahren nach einem der Ansprüche 4 bis 5, **dadurch gekennzeichnet, dass** der Antrag auf einem Leistungsniveau entsandt wird, das lokal stärker als eine gleichwertige Meldung einer Basisstation des ersten Netzes ist.

7. Verfahren nach einem der Ansprüche 4 bis 5, **dadurch gekennzeichnet, dass** der Antrag zu Daten entsandt wird, die mit jenen von gleichwertigen von dem ersten Netz entsandten Anträgen vereinbar sind.

8. Verfahren nach einem der Ansprüche 1 bis 7, **dadurch gekennzeichnet, dass** die Umleitung vom Ort der Erfassung abhängt.

9. Verfahren nach einem der Ansprüche 1 bis 8, **dadurch gekennzeichnet, dass** das zweite Telefon physisch zum ersten unterschiedlich ist.

10. Verfahren nach einem der Ansprüche 1 bis 8, **dadurch gekennzeichnet, dass** das zweite Telefon mit dem ersten Telefon zu einem kombinierten Telefon zusammengeschlossen ist.
